(19) Europäisches Patentamt
European Patent Office
Office européen des brevets

(11) Veröffentlichungsnummer: **0 434 611 A2**

# (12) EUROPÄISCHE PATENTANMELDUNG

(21) Anmeldenummer: **90810940.8**

(22) Anmeldetag: **03.12.90**

(51) Int. Cl.5: **C09B 29/44**, C09B 29/36, //C09B29/01

(30) Priorität: **11.12.89 CH 4437/89**

(43) Veröffentlichungstag der Anmeldung: **26.06.91 Patentblatt 91/26**

(84) Benannte Vertragsstaaten: **BE CH DE ES FR GB LI**

(71) Anmelder: **CIBA-GEIGY AG**
**Klybeckstrasse 141**
**CH-4002 Basel(CH)**

(72) Erfinder: **Walter, Harald, Dr.**
**Rufacherstrasse 20**
**CH-4055 Basel(CH)**

## (54) Azofarbstoffe, deren Herstellung und deren Verwendung.

(57) Azofarbstoffe der Formel

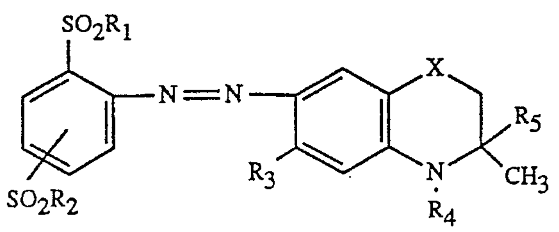

(1),

worin $R_1$ und $R_2$ unabhängig voneinander gegebenenfalls substituiertes $C_1$-$C_8$-Alkyl, $C_1$-$C_8$-Alkoxy, Phenyl, Naphthyl, Phenoxy, Naphthoxy oder $-N(R_6)R_7$ sind, wobei $R_6$ und $R_7$ unabhängig voneinander Wasserstoff, gegebenenfalls substituiertes $C_1$-$C_8$-Alkyl, Phenyl oder Naphthyl sind, $R_3$ Wasserstoff, $C_2$-$C_4$-Alkanoylamino oder gegebenenfalls substituiertes $C_1$-$C_8$-Alkyl oder $C_1$-$C_8$-Alkoxy, $R_4$ gegebenenfalls substituiertes $C_1$-$C_8$-Alkyl oder Benzyl, $R_5$ Wasserstoff oder gegebenenfalls substituiertes $C_1$-$C_8$-Alkyl ist, X -O- oder $-CHR_8-$, $R_8$ gegebenenfalls substituiertes $C_1$-$C_8$-Alkyl ist und der Farbstoff der Formel (1) mindestens eine Sulfo-, Sulfato- oder Thiosulfatogruppe enthält, ergeben auf stickstoffhaltigen oder hydroxylgruppenhältigen Fasermaterialien Färbungen von guten Echtheiten.

EP 0 434 611 A2

# AZOFARBSTOFFE, DEREN HERSTELLUNG UND DEREN VERWENDUNG

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel

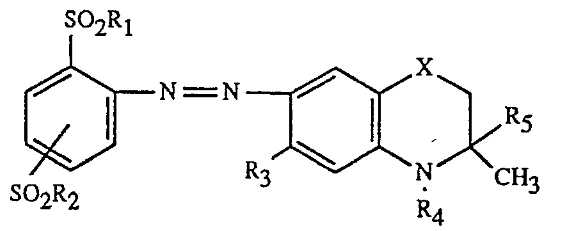

(1),

worin $R_1$ und $R_2$ unabhängig voneinander gegebenenfalls substituiertes $C_1$-$C_8$-Alkyl, $C_1$-$C_8$-Alkoxy, Phenyl, Naphthyl, Phenoxy, Naphthoxy oder -N($R_6$)$R_7$ sind, wobei $R_6$ und $R_7$ unabhängig voneinander Wasserstoff, gegebenenfalls substituiertes $C_1$-$C_8$-Alkyl, Phenyl oder Naphthyl sind, $R_3$ Wasserstoff, $C_2$-$C_4$-Alkanoylamino oder gegebenenfalls substituiertes $C_1$-$C_8$-Alkyl oder $C_1$-$C_8$-Alkoxy, $R_4$ gegebenenfalls substituiertes $C_1$-$C_8$-Alkyl oder Benzyl, $R_5$ Wasserstoff oder gegebenenfalls substituiertes $C_1$-$C_8$-Alkyl, X -O-oder-CH$R_8$-,$R_8$ gegebenenfalls substituiertes $C_1$-$C_8$-Alkyl ist und der Farbstoff der Formel (1) mindestens eine Sulfo-, Sulfato- oder Thiosulfatogruppe enthält.

Als $C_1$-$C_8$-Alkyl kommen für $R_1$, $R_2$, $R_3$, $R_4$, $R_5$, $R_6$, $R_7$ und $R_8$ in Formel (1) unabhängig voneinander z.B. in Betracht: Methyl, Aethyl, Propyl, Isopropyl, n-Butyl, Isobutyl, sek.-Butyl, tert.-Butyl, Pentyl, Hexyl, Heptyl oder Octyl, sowie die entsprechenden Reste, die z.B. durch Hydroxy, $C_1$-$C_4$-Alkoxy, wie z.B. Methoxy, Aethoxy, Propoxy, Isopropoxy oder Butoxy, Sulfo, Sulfato, Thiosulfato, Cyan oder Halogen, wie z.B. Fluor, Chlor oder Brom, substituiert sind.

Als $C_1$-$C_8$-Alkoxy kommen für $R_1$, $R_2$ und $R_3$ in Formel (1) unabhängig voneinander z.B. in Betracht: Methoxy, Aethoxy, Propoxy, Isopropoxy, Butoxy, Isobutoxy, sek.-Butoxy, tert.-Butoxy, Pentoxy, Hexyloxy, Heptyloxy oder Octyloxy.

Als $C_2$-$C_4$-Alkanoylamino kommen für $R_3$ in Formel (1) z.B. Acetylamino, Propionylamino, Butyrylamino, Isobutyrylamino oder Isovalerylamino in Betracht.

Als Phenyl, Naphthyl, Phenoxy und Naphthoxy kommen für $R_1$ und $R_2$ und als Phenyl und Naphthyl für $R_6$ und $R_7$ in Formel (1) unabhängig voneinander neben den oben genannten unsubstituierten Resten die durch $C_1$-$C_4$-Alkyl, wie z.B. Methyl oder Aethyl, $C_1$-$C_4$-Alkoxy, wie z.B. Methoxy oder Aethoxy, $C_2$-$C_4$-Alkanoylamino, wie z.B. Acetylamino oder Propionylamino, Hydroxy, Sulfo, Sulfato,Thiosulfato, Cyan oder Halogen, wie z.B. Fluor, Chlor oder Brom, substituierten Reste in Betracht.

Als Benzyl kommt für $R_4$ in Formel (1) unsubstituiertes oder im Phenylring substituiertes Benzyl in Betracht, wobei als Substituenten die oben für $R_1$ und $R_2$ in der Bedeutung als Phenyl, Naphthyl, Phenoxy und Naphthoxy angegebenen Substituenten genannt seien.

Bevorzugt sind Azofarbstoffe der Formel (1), worin die Zahl der Sulfo- und/oder Sulfatogruppen, insbesondere die Zahl der Sulfogruppen, 1 oder 2 ist.

Weiterhin bevorzugt sind Azofarbstoffe der Formel (1), worin $R_1$ durch $C_1$-$C_4$-Alkyl, insbesondere Methyl, Halogen, insbesondere Chlor, oder Sulfo substituiertes Phenyl oder Naphthyl, insbesondere durch $C_1$-$C_4$-Alkyl, Halogen oder Sulfo substituiertes Phenyl, ist.

Ferner bevorzugt sind Azofarbstoffe der Formel (1), worin $R_2$ durch Sulfo substituiertes Phenoxy oder Naphthoxy, insbesondere durch Sulfo substituiertes Phenoxy, oder -N($R_6$)$R_7$ ist, wobei $R_6$ und $R_7$ unabhängig voneinander Wasserstoff, $C_1$-$C_4$-Alkyl, insbesondere Methyl, oder durch Sulfo substituiertes Phenyl oder Naphthyl sind.

Der Rest $R_3$ ist vorzugsweise Wasserstoff oder $C_1$-$C_4$-Alkyl, insbesondere Methyl. Bevorzugt ist der Rest $R_3$ $C_1$-$C_4$-Alkyl.

Der Rest $R_4$ ist vorzugsweise $C_1$-$C_8$-Alkyl, insbesondere Aethyl, oder Benzyl.

Der Rest $R_5$ ist vorzugsweise Wasserstoff oder $C_1$-$C_4$-Alkyl, insbesondere Methyl.

Ebenfalls bevorzugt sind Azofarbstoffe der Formel (1), worin X -O- oder -CH$R_8$- und $R_8$ $C_1$-$C_4$-Alkyl, insbesondere Methyl, ist.

In den Azofarbstoffen der Formel (1) ist der Rest -$SO_2R_2$ bevorzugt in para-Stellung zum Rest -$SO_2R_1$

an den Phenylring gebunden.

Besonders bevorzugt sind Azofarbstoffe der Formel (1), worin $R_3$ $C_1$-$C_4$-Alkyl, $R_4$ $C_1$-$C_8$-Alkyl oder Benzyl und $R_5$ Wasserstoff oder $C_1$-$C_4$-Alkyl ist.

Ganz besonders bevorzugt sind Azofarbstoffe der Formel (1), worin $R_1$ durch $C_1$-$C_4$-Alkyl, Halogen oder Sulfo substituiertes Phenyl, $R_2$ durch Sulfo substituiertes Phenoxy oder -N($R_6$)$R_7$ ist, wobei $R_6$ und $R_7$ unabhängig voneinander Wasserstoff, $C_1$-$C_4$-Alkyl oder durch Sulfo substituiertes Phenyl oder Naphthyl sind, $R_3$ $C_1$-$C_4$-Alkyl, $R_4$ $C_1$-$C_8$-Alkyl oder Benzyl, $R_5$ Wasserstoff oder $C_1$-$C_4$-Alkyl, X -O- oder -CH$R_8$- und $R_8$ $C_1$-$C_4$-Alkyl ist, insbesondere worin $R_1$ durch Methyl, Chlor oder Sulfo substituiertes Phenyl, $R_2$ durch Sulfo substituiertes Phenoxy oder -N($R_6$)$R_7$ ist, wobei $R_6$ und $R_7$ unabhängig voneinander Wasserstoff, Methyl oder durch Sulfo substituiertes Phenyl oder Naphthyl sind, $R_3$ Methyl, $R_4$ $C_1$-$C_8$-Alkyl oder Benzyl, $R_5$ Wasserstoff oder Methyl und X -O-oder -$CHCH_3$- ist.

Besonders wichtig sind Azofarbstoffe der Formel (1), worin $R_1$ durch $C_1$-$C_4$-Alkyl oder Sulfo substituiertes Phenyl, $R_2$ durch Sulfo substituiertes Phenoxy oder -N($R_6$)$R_7$ ist, wobei $R_6$ und $R_7$ unabhängig voneinander Wasserstoff, $C_1$-$C_4$-Alkyl oder durch Sulfo substituiertes Phenyl oder Naphthyl sind, $R_3$ und $R_4$ $C_1$-$C_4$-Alkyl, $R_5$ Wasserstoff oder $C_1$-$C_4$-Alkyl, X -O- oder -CH$R_8$- und $R_8$ $C_1$-$C_4$-Alkyl ist, insbesondere worin $R_1$ durch Methyl oder Sulfo substituiertes Phenyl, $R_2$ durch Sulfo substituiertes Phenoxy oder -N($R_6$)-$R_7$ ist, wobei $R_6$ und $R_7$ unabhängig voneinander Wasserstoff, Methyl oder durch Sulfo substituiertes Phenyl oder Naphthyl sind, $R_3$ Methyl, $R_4$ Aethyl, $R_5$ Wasserstoff oder Methyl und X -O- oder -$CHCH_3$- ist.

Ganz besonders wichtig sind Azofarbstoffe der Formel

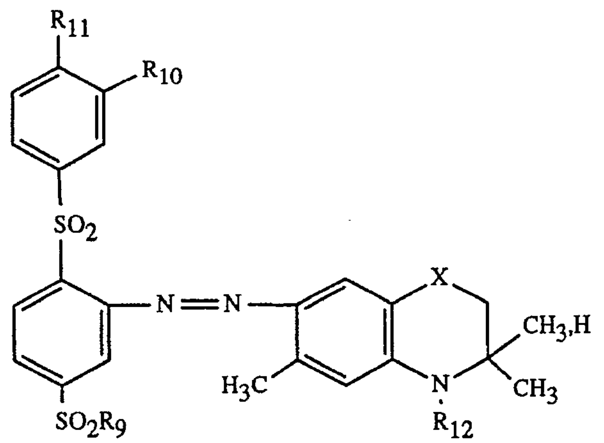

(2),

worin $R_9$ durch Sulfo substituiertes Phenoxy, Amino, Dimethylamino oder durch Sulfo substituiertes Phenylamino oder Naphthylamino, $R_{10}$ Wasserstoff oder Sulfo, $R_{11}$ Methyl oder Chlor, $R_{12}$ $C_1$-$C_8$-Alkyl oder Benzyl und X -O- oder -$CHCH_3$- ist. Vorzugsweise ist in den Azofarbstoffen der Formel (2) $R_{11}$ Methyl und $R_{12}$ Aethyl.

Gegenstand der Erfindung ist ferner ein Verfahren zur Herstellung der Azofarbstoffe der Formel (1), welches dadurch gekennzeichnet ist, dass man ein Amin der Formel

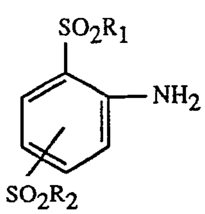

(3),

worin $R_1$ und $R_2$ die unter Formel (1) angegebenen Bedeutungen haben, diazotiert und auf eine Kupplungskomponente der Formel

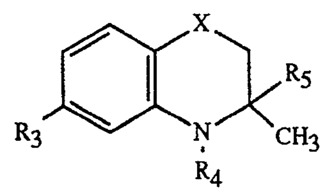

(4),

worin $R_3$, $R_4$, $R_5$ und X die unter Formel (1) angegebenen Bedeutungen haben, kuppelt, wobei das Amin der Formel (3) oder die Kupplungskomponente der Formel (4) mindestens eine Sulfo-, Sulfato- oder Thiosulfatogruppe enthält.

Die Diazotierungdes Amins der Formel (3) erfolgt in der Regel durch Einwirken salpetriger Säure in wässrig-mineralsaurer Lösung bei tiefer Temperatur, die Kupplung auf die Kupplungskomponente der Formel (4) bei sauren bis neutralen pH-Werten, insbesondere bei einem pH-Wert von 1 bis 6.

Gegebenenfalls kann nach der Kupplung eine freie Aminogruppe im Azofarbstoff der Formel (1) mit einem Acylierungs- oder Alkylierungsmittel in eine Acylamino- oder Alkylaminogruppe umgewandelt werden, und ebenso kann eine geeignete Hydroxygruppe durch Acylierung oder Alkylierung in eine Acyloxy- oder Alkoxygruppe überführt werden. Ferner kann eine freie aliphatische Hydroxygruppe in eine wasserlöslichmachende Gruppe, wie z.B. durch Sulfatierung in eine Sulfatogruppe, überführt werden.

Bevorzugte Ausführungsformen des erfindungsgemässen Verfahrens sind dadurch gekennzeichnet, dass man

- ein Amin der Formel (3) und eine Kupplungskomponente der Formel (4) verwendet, welche zusammen eine oder zwei Sulfo- und/oder Sulfatogruppen enthalten;
- ein Amin der Formel (3) verwendet, worin $R_1$ durch $C_1$-$C_4$-Alkyl, insbesondere Methyl, Halogen, insbesondere Chlor, oder Sulfo substituiertes Phenyl oder Naphthyl, insbesondere durch $C_1$-$C_4$-Alkyl, Halogen oder Sulfo substituiertes Phenyl, ist;
- ein Amin der Formel (3) verwendet, worin $R_2$ durch Sulfo substituiertes Phenoxy oder Naphthoxy, insbesondere durch Sulfo substituiertes Phenoxy, oder $-N(R_6)R_7$ ist, wobei $R_6$ und $R_7$ unabhängig voneinander Wasserstoff, $C_1$-$C_4$-Alkyl, insbesondere Methyl, oder durch Sulfo substituiertes Phenyl oder Naphthyl sind;
- ein Amin der Formel (3) verwendet, worin der Rest $-SO_2R_2$ in para-Stellung zum Rest $-SO_2R_1$ an den Phenylring gebunden ist;
- eine Kupplungskomponente der Formel (4) verwendet, worin $R_3$ $C_1$-$C_4$-Alkyl, insbesondere Methyl, ist;
- eine Kupplungskomponente der Formel (4) verwendet, worin $R_4$ $C_1$-$C_8$-Alkyl, insbesondere Aethyl, oder Benzyl ist;
- eine Kupplungskomponente der Formel (4) verwendet, worin $R_5$ Wasserstoff oder $C_1$-$C_4$-Alkyl, insbesondere Methyl, ist;
- eine Kupplungskomponente der Formel (4) verwendet, worin X -O- oder $-CHR_8-$ und $R_8$ $C_1$-$C_4$-Alkyl, insbesondere Methyl, ist.

Eine besonders bevorzugte Ausführungsform des erfindungsgemässen Verfahrens ist dadurch gekennzeichnet, dass man eine Kupplungskomponente der Formel (4) verwendet, worin $R_3$ $C_1$-$C_4$-Alkyl, $R_4$ $C_1$-$C_8$-Alkyl oder Benzyl und $R_5$ Wasserstoff oder $C_1$-$C_4$-Alkyl ist.

Eine ganz besonders bevorzugte Ausführungsform des erfindungsgemässen Verfahrens zur Herstellung der Azofarbstoffe der Formel (1), ist dadurch gekennzeichnet, dass man ein Amin der Formel (3), worin $R_1$ durch $C_1$-$C_4$-Alkyl, Halogen oder Sulfo substituiertes Phenyl und $R_2$ durch Sulfo substituiertes Phenoxy oder $-N(R_6)R_7$ ist, wobei $R_6$ und $R_7$ unabhängig voneinander Wasserstoff, $C_1$-$C_4$-Alkyl oder durch Sulfo substituiertes Phenyl oder Naphthyl sind, diazotiert und auf eine Kupplungskomponente der Formel (4), worin $R_3$ $C_1$-$C_4$-Alkyl, $R_4$ $C_1$-$C_8$-Alkyl oder Benzyl, $R_5$ Wasserstoff oder $C_1$-$C_4$-Alkyl, X -O-oder $-CHR_8-$ und $R_8$ $C_1$-$C_4$-Alkyl ist, kuppelt.

Eine besonders bevorzugte Ausführungsform des erfindungsgemässen Verfahrens ist dadurch gekennzeichnet, dass man ein Amin der Formel

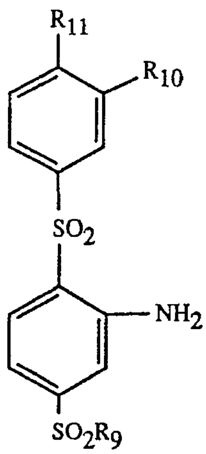

(5),

worin $R_9$, $R_{10}$ und $R_{11}$ die unter Formel (2) angegebenen Bedeutungen haben und wobei das Amin der Formel (5) mindestens eine Sulfogruppe enthält, diazotiert und auf eine Kupplungskomponente der Formel

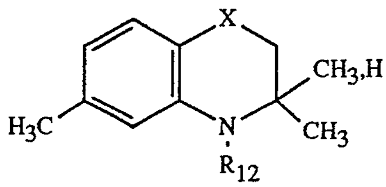

(6),

worin $R_{12}$ und X die unter Formel (2) angegebenen Bedeutungen haben, kuppelt.

Als Amine der Formel (3) kommen z.B. in Betracht:
2-Amino-4'-methyl-3'-sulfo-4-aminosulfonyl-1,1'-diphenylsulfon,
2-Amino-4'-methyl-3'-sulfo-4-dimethylaminosulfonyl-1,1'- diphenylsulfon,
2-Amino-4'-methyl-4-(3''-sulfo-phenylaminosulfonyl)-1,1'- diphenylsulfon,
2-Amino-4'-methyl-4-(4''-sulfo-phenoxysulfonyl)-1,1'- diphenylsulfon,
2-Amino-4'-methyl-4-(1'',5''-disulfonaphthyl-2''-aminosulfonyl)-1,1'- diphenylsulfon,
2-Amino-4'-chloro-4-(1'',5''-disulfonaphthyl-2''-aminosulfonyl)-1,1'- diphenylsulfon,
2-Amino-4'methyl-4-(5'',7''-disulfonaphthyl-2''-aminosulfonyl)-1,1'- diphenylsulfon,
2-Amino-4'-chloro-4-(5'',7''-disulfonaphthyl-2''-aminosulfonyl)-1,1'- diphenylsulfon.

Als Kupplungskomponenten der Formel (4) kommen z.B. in Betracht:
N-Aethyl-1,2,3,4-tetrahydro-2,2,4,7-tetramethylchinolin,
N-Benzyl-1,2,3,4-tetrahydro-2,2,4,7-tetramethylchinolin,
N-Isopropyl-1,2,3,4-tetrahydro-2,2,4,7-tetramethylchinolin,
N-(n-Propyl)-1,2,3,4-tetrahydro-2,2,4,7-tetramethylchinolin,
N-(n-Butyl)-1,2,3,4-tetrahydro-2,2,4,7-tetramethylchinolin,
N-(n-Hexyl)-1,2,3,4-tetrahydro-2,2,4,7-tetramethylchinolin,
N-(n-Oktyl)-1,2,3,4-tetrahydro-2,2,4,7-tetramethylchinolin,
N-Aethyl-1,2,3,4-tetrahydro-2,2,4-trimethylchinolin,
N-Aethyl-1,2,3,4-tetrahydro-2,2,4-trimethyl-7-methoxychinolin,
N-Aethyl-1,2,3,4-tetrahydro-2,4,7-trimethylchinolin, 1-Aethyl-2,7-dimethylbenzoxazin, 1-Aethyl-2-methylbenzoxazin.

Die Amine der Formel (3) und die Kupplungskomponenten der Formel (4) sind an sich bekannt und können in Analogie zu bekannten Verbindungen hergestellt werden.

So können die Amine der Formel (3) z.B. hergestellt werden, indem man eine Verbindung der Formel

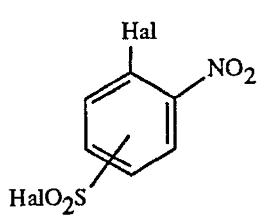

(7),

worin Hal Halogen bedeutet, mit einer Verbindung der Formel $HR_2$, worin $R_2$ die unter Formel (1) angegebenen Bedeutungen hat, zur Verbindung der Formel

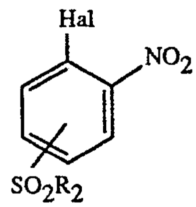

(8),

umsetzt, und die Verbindung der Formel (8) mit einer Verbindung der Formel $R_1SO_2M$, worin $R_1$ die unter Formel (1) angegebenen Bedeutungen hat und M ein Kation, wie z.B. Natrium, Lithium oder Kalium, ist, kondensiert und anschliessend die $NO_2$-Gruppe reduziert.

Die Verfahrensweisen zur Herstellung der Amine der Formel (3) sind an sich bekannt. Die Umsetzungen erfolgen bei Temperaturen zwischen 0 und 150° C, gegebenenfalls unter Druck, in wässriger Lösung oder Gemischen aus organischen Lösungsmitteln, wie z.B. Aceton und Wasser, und bei pH-Werten zwischen 7 und 10. Die Reduktion der Nitrogruppe erfolgt ebenfalls nach an sich bekannten Methoden, wie z.B. in Eisessig in Gegenwart von Eisenpulver.

Die Farbstoffe der Formel (1) liegen entweder in der Form ihrer freien Säure oder vorzugsweise als deren Salze vor.

Als Beispiel seien die Natrium-, Lithium-, Kalium- oder Ammoniumsalze oder das Salz des Mono-, Di- oder Triäthanolamins genannt

Die erfindungsgemässen Azofarbstoffe der Formel (1) eignen sich nach an sich bekannten Methoden zum Färben oder Bedrucken, insbesondere von stickstoffhaltigen oder hydroxygruppenhaltigen Fasermaterialien, wie z.B. textilen Fasermaterialien aus Cellulose,Polyester, Seide und insbesondere Wolle und synthetischen Polyamiden. Man erhält egale Färbungen mit guten Allgemeinechtheiten, insbesondere guter Reib-, Nass-, Nassreib- und Lichtechtheit. Ferner sind die erfindungsgemässen Farbstoffe sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1: Bei einer Temperatur von 25° werden 5,85 Teile 2-Amino-4'-methyl-3'-sulfo-4-aminosulfonyl-1,1'-diphenylsulfon in 30 Teilen Wasser durch Zugabe von 3 Teilen wässriger Natriumhydroxidlösung (4N) gelöst. Unter Rühren werden 0,74 Teile Natriumnitrit zugegeben und die resultierende Lösung innerhalb ca. 10 Minuten in eine Mischung von 30 Teilen Eis und 10 Teilen Salzsäure (32%), deren Temperatur 2 bis 4° beträgt, eingetragen. Es wird 2 Stunden bei einer Temperatur von 0 bis 5° gerührt, anschliessend werden 0,7 Teile Sulfaminsäure zugegeben, kurz nachgerührt und daraufhin 2,4 Teile N-Aethyl-1,2,3,4-tetrahydro-2,2,4,7-tetramethylchinolin innerhalb ca. 1 Minute bei einer Temperatur von 0 bis 3° zugetropft. Bei einer Temperatur von 0 bis 5° werden 6 Teile Natriumacetat x $3H_2O$ zugegeben, 1 Stunde nachgerührt, nochmals 6 Teile Natriumacetat x $3H_2O$ zugegeben und eine weitere Stunde nachgerührt. Nach Zutropfen einer Lösung aus 6 Teilen Natriumacetat x $3H_2O$, 3 Teilen Natriumcarbonat und 30 Teilen Wasser wird die Mischung auf Raumtemperatur erwärmt, der erhaltene Farbstoff abfiltriert und bei 50° im Vakuum getrocknet. Man erhält 6 Teile eines Farbstoffs, der in Form der freien Säure der Verbindung der Formel

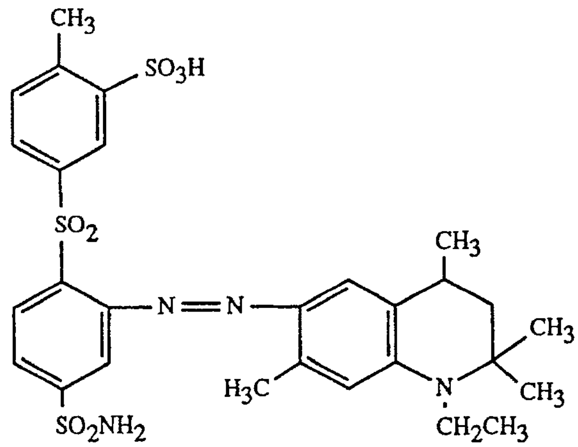

entspricht. Der erhaltene Farbstoff färbt synthetische und natürliche Polyamidmaterialien in blaustichig roten Farbtönen.

Beispiele 2 bis 27: Verfährt man wie in Beispiel 1 angegeben, verwendet jedoch gegebenenfalls statt 5,85 Teile 2-Amino-4'-methyl-3'-sulfo-4-aminosulfonyl-1,1'-diphenylsulfon eine äquimolare Menge eines Amins der Formel

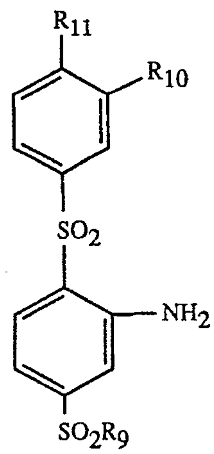

,

worin $R_9$, $R_{10}$ und $R_{11}$ die in Tabelle 1 in den Spalten 2,3 und 4 angegebenen Bedeutungen haben, und gegebenenfalls statt 2,4 Teile N-Aethyl-1,2,3,4-tetrahydro-2,2,4,7-tetramethylchinolin eine äquimolare Menge der Verbindung der Formel

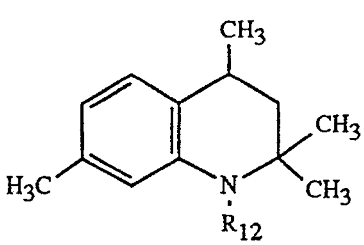

,

worin $R_{12}$ die in Tabelle 1 in Spalte 5 angegebenen Bedeutungen hat, so erhält man analoge Farbstoffe, die synthetische und natürliche Polyamidmaterialien in blaustichig roten Farbtönen Färben.

Tabelle 1

| Bsp. | $R_9$ | $R_{10}$ | $R_{11}$ | $R_{12}$ |
|---|---|---|---|---|
| 2 | $-N(CH_3)_2$ | $-SO_3H$ | $-CH_3$ | $-C_2H_5$ |
| 3 | 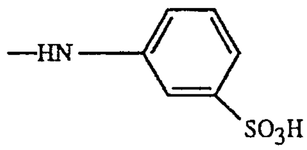 | -H | $-CH_3$ | $-C_2H_5$ |
| 4 | 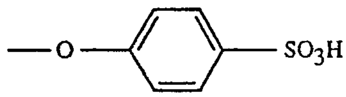 | -H | $-CH_3$ | $-C_2H_5$ |
| 5 | 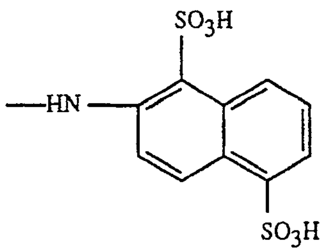 | -H | $-CH_3$ | $-C_2H_5$ |
| 6 | 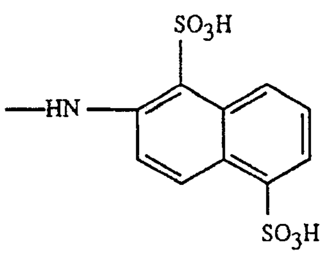 | -H | $-CH_3$ | $-CH(CH_3)_2$ |
| 7 | 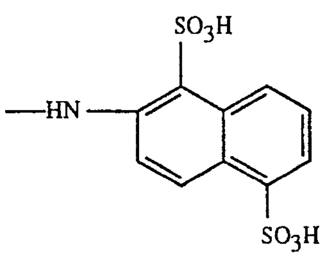 | -H | $-CH_3$ | $-(CH_2)_2CH_3$ |
| 8 | 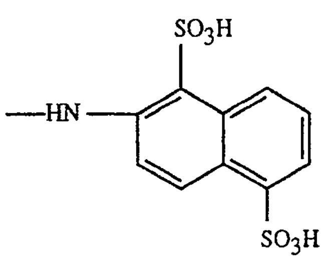 | -H | $-CH_3$ | $-(CH_2)_3CH_3$ |

Tabelle 1 (Fortsetzung)

| Bsp. | $R_9$ | $R_{10}$ | $R_{11}$ | $R_{12}$ |
|---|---|---|---|---|
| 9 | 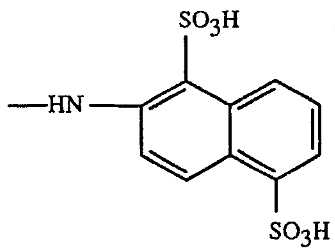 | -H | $-CH_3$ | $-(CH_2)_5CH_3$ |
| 10 | 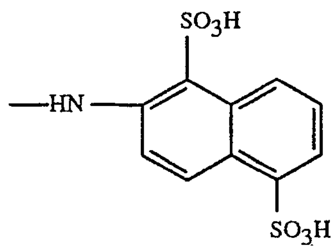 | -H | $-CH_3$ | $-(CH_2)_7CH_3$ |
| 11 | 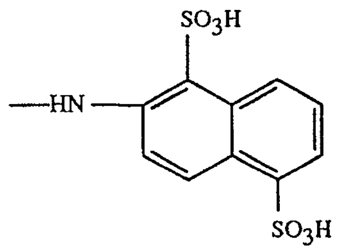 | -H | $-CH_3$ | $-CH_2-C_6H_5$ |
| 12 | 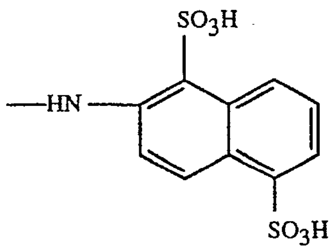 | -H | -Cl | $-CH_2CH_3$ |
| 13 | 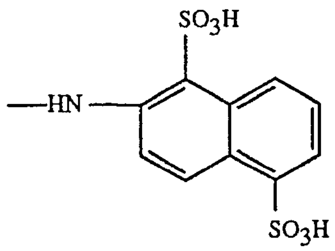 | -H | -Cl | $-(CH_2)_3CH_3$ |

Tabelle 1 (Fortsetzung)

| Bsp. | $R_9$ | $R_{10}$ | $R_{11}$ | $R_{12}$ |
|---|---|---|---|---|
| 14 | 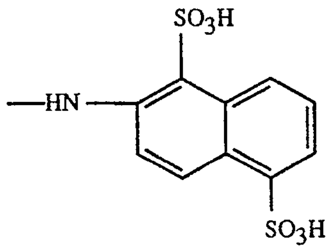 | -H | -Cl | $-(CH_2)_5CH_3$ |
| 15 | 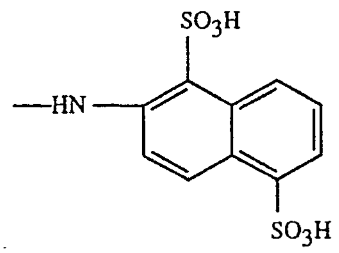 | -H | -Cl | $-CH_2-C_6H_5$ |
| 16 | 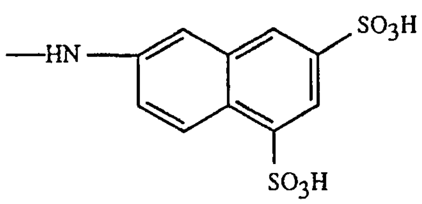 | -H | $-CH_3$ | $-C_2H_5$ |
| 17 | 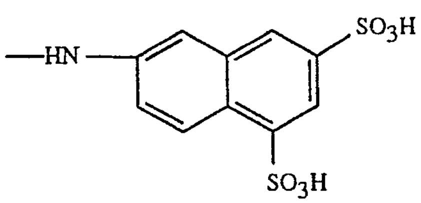 | -H | $-CH_3$ | $-CH(CH_3)_2$ |
| 18 | 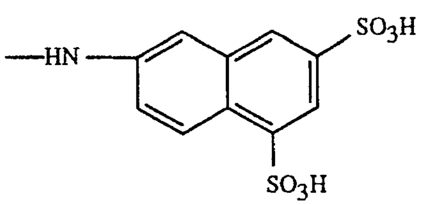 | -H | $-CH_3$ | $-(CH_2)_2CH_3$ |
| 19 | 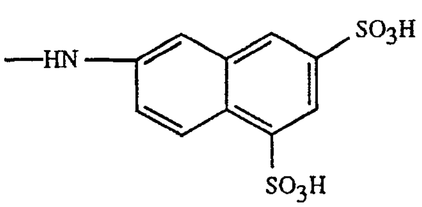 | -H | $-CH_3$ | $-(CH_2)_3CH_3$ |

Tabelle 1 (Fortsetzung)

| Bsp. | $R_9$ | $R_{10}$ | $R_{11}$ | $R_{12}$ |
|---|---|---|---|---|
| 20 | 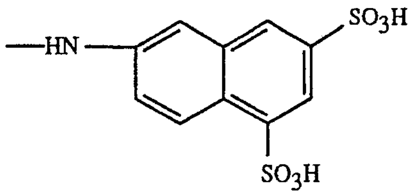 | -H | $-CH_3$ | $-(CH_2)_5CH_3$ |
| 21 | 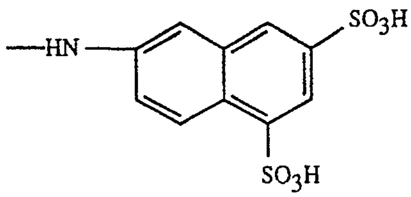 | -H | $-CH_3$ | $-(CH_2)_7CH_3$ |
| 22 | 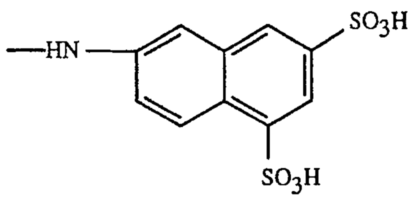 | -H | $-CH_3$ | $-CH_2-C_6H_5$ |
| 23 | 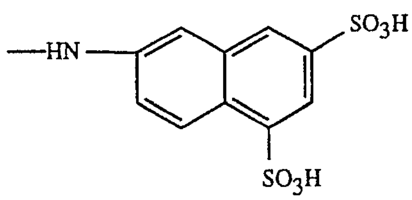 | -H | -Cl | $-CH_2CH_3$ |
| 24 | 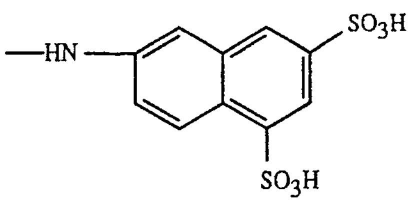 | -H | -Cl | $-(CH_2)_3CH_3$ |
| 25 | 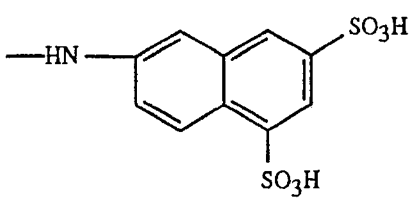 | -H | -Cl | $-(CH_2)_5CH_3$ |
| 26 | 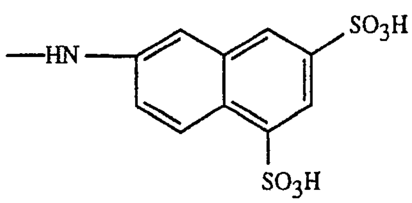 | -H | -Cl | $-(CH_2)_7CH_3$ |

Tabelle 1 (Fortsetzung)

| Bsp. | $R_9$ | $R_{10}$ | $R_{11}$ | $R_{12}$ |
|---|---|---|---|---|
| 27 | 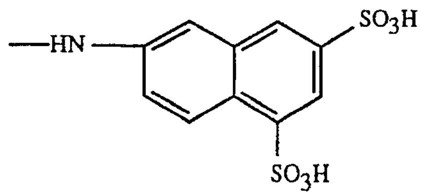 | -H | -Cl | $-CH_2-C_6H_5$ |

Beispiel 28: Eine Lösung von 9,3 Teilen 2-Amino-4'-methyl-4-(1",5"-disulfonaphthyl-2"-aminosulfonyl)-1,1'- diphenylsulfon, 50 Teilen Wasser, 5 Teilen wässriger Natriumhydroxidlösung (4N) und 0,74 Teilen Natriumnitrit werden innerhalb ca. 10 Minuten zu einem Gemisch von 30 Teilen Eis und 12 Teilen Salzsäure (32%), dessen Temperatur 0 bis 5° beträgt, getropft. Nach 2 Stunden Rühren bei einer Temperatur von 0 bis 5° werden 0,75 Teile Sulfaminsäure zugegeben und nach kurzem Nachrühren werden 1,95 Teile 1-Aethyl-2,7-dimethylbenzoxazin innerhalb 1 Minute unter Rühren zugetropft. Innerhalb 3 Stunden werden im Abstand von jeweils einer Stunde 18 Teile Natriumacetat x $3H_2O$ in 3 Portionen zugegeben. Anschliessend wird innerhalb 30 Minuten eine Lösung von 6 Teilen Natriumacetat x $3H_2O$, 3 Teilen Natriumcarbonat und 30 Teilen Wasser so zugetropft, dass die Innentemperatur 5° nicht übersteigt. Die Reaktionsmischung wird daraufhin auf 250 Teile einer gesättigten Natriumchloridlösung gegossen. Nach Filtration und Trocknung im Vakuum bei 50° erhält man 8,1 Teile einer Verbindung, die in Form der freien Säure dem Farbstoff der Formel

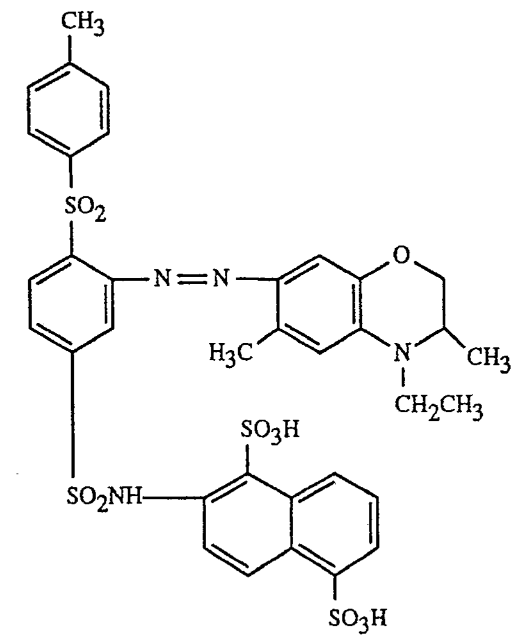

entspricht. Der erhaltene Farbstoff färbt synthetische und natürliche Polyamidmaterialien in blaustichig roten Farbtönen.

Beispiele 29 bis 31: Verfährt man wie in Beispiel 28 angegeben, verwendet jedoch statt 9,3 Teile 2-Amino-4'-methyl-4-(1",5"-disulfonaphthyl-2"-aminosulfonyl)-1,1'-diphenylsulfon eine äquimolare Menge der in Tabelle 2 in Spalte 2 in Form der freien Säuren angegebenen Amine, so erhält man analoge Farbstoffe, die synthetische und natürliche Polyamidmaterialien in blaustichig roten Farbtönen färben.

Tabelle 2

| Bsp. | Amin |
| --- | --- |
| 29 | 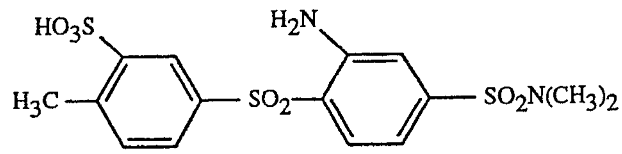 |
| 30 | 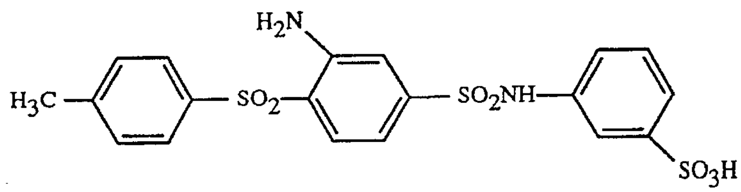 |
| 31 | 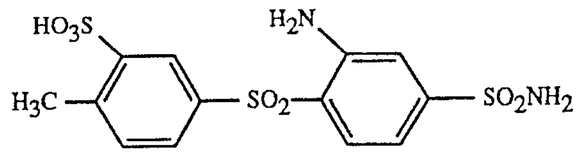 |

Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 1 beträgt 0,7% bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein blaustichig rot gefärbtes Polyamid-6,6-Gewebe, das gute Gesamtechtheiten aufweist.

Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 2 beträgt 1 %, bezogen auf das Fasergewicht. Die Färbedauer bei einer Temperatur von 98° beträgt 30 bis 90 Minuten. Das gefärbte Poly amid-6,6-Gewebe wird anschliessend herausgenommen und wie üblich gewaschen und getrocknet.

Man erhält ein blaustichig rot gefärbtes Polyamid-6,6-Gewebe, das gute Gesamtechtheiten aufweist.

Färbevorschrift III

Man färbt 10 Teile Wollgewebe in 500 Teilen einer wässrigen Flotte. Bezogen auf das Fasergewicht betragen die Anteile an Farbstoff 0,45% gemäss Beispiel 28, an Glaubersalz kalz. 5 % und 80%-iger Essigsäure 2 %. Die Färbedauer bei einer Temperatur von 98° beträgt 30-60 Minuten. Das blaustichig rot gefärbte, wie üblich gewaschene und getrocknete Wollgewebe weist sehr gute Allgemeinechtheiten auf.

**Ansprüche**

1. Azofarbstoffe der Formel

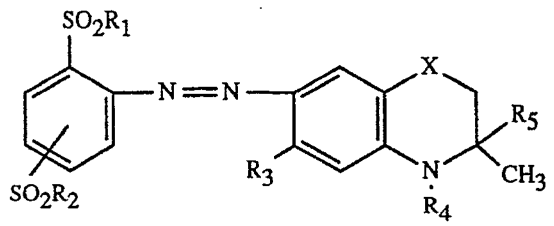

(1),

worin $R_1$ und $R_2$ unabhängig voneinander gegebenenfalls substituiertes $C_1$-$C_8$-Alkyl, $C_1$-$C_8$-Alkoxy, Phenyl, Naphthyl, Phenoxy, Naphthoxy oder -N($R_6$)$R_7$ sind, wobei $R_6$ und $R_7$ unabhängig voneinander Wasserstoff, gegebenenfalls substituiertes $C_1$-$C_8$-Alkyl, Phenyl oder Naphthyl sind, $R_3$ Wasserstoff, $C_2$-$C_4$-Alkanoylamino oder gegebenenfalls substituiertes $C_1$-$C_8$-Alkyl oder $C_1$-$C_8$-Alkoxy, $R_4$ gegebenenfalls substituiertes $C_1$-$C_8$-Alkyl oder Benzyl, $R_5$ Wasserstoff oder gegebenenfalls substituiertes $C_1$-$C_8$-Alkyl ist, X -O- oder -$CHR_8$-, $R_8$ gegebenenfalls substituiertes $C_1$-$C_8$-Alkyl ist und der Farbstoff der Formel (1) mindestens eine Sulfo-, Sulfato- oder Thiosulfatogruppe enthält.

**2.** Azofarbstoffe gemäss Anspruch 1, worin die Zahl der Sulfo- und/oder Sulfatogruppen 1 oder 2 ist.

**3.** Azofarbstoffe gemäss einem der Ansprüche 1 und 2, worin $R_1$ durch $C_1$-$C_4$-Alkyl, Halogen oder Sulfo substituiertes Phenyl oder Naphthyl, insbesondere durch $C_1$-$C_4$-Alkyl, Halogen oder Sulfo substituiertes Phenyl, ist.

**4.** Azofarbstoffe gemäss einem der Ansprüche 1 bis 3, worin $R_2$ durch Sulfo substituiertes Phenoxy oder Naphthoxy, insbesondere durch Sulfo substituiertes Phenoxy, oder -N($R_6$)$R_7$ ist, wobei $R_6$ und $R_7$ unabhängig voneinander Wasserstoff, $C_1$-$C_4$-Alkyl oder durch Sulfo substituiertes es Phenyl oder Naphthyl sind.

**5.** Azofarbstoffe gemäss einem der Ansprüche 1 bis 4, worin $R_3$ $C_1$-$C_4$-Alkyl, $R_4$ $C_1$-$C_8$-Alkyl oder Benzyl und $R_5$ Wasserstoff oder $C_1$-$C_4$-Alkyl ist

**6.** Azofarbstoffe gemäss einem der Ansprüche 1 bis 5, worin X -O- oder -$CHR_8$- und $R_8$$C_1$-$C_4$-Alkyl, insbesondere Methyl, ist.

**7.** Azofarbstoffe gemäss einem der Ansprüche 1 bis 6, worin $R_1$ durch $C_1$-$C_4$-Alkyl, Halogen oder Sulfo substituiertes Phenyl, $R_2$ durch Sulfo substituiertes Phenoxy oder -N($R_6$)$R_7$ ist, wobei $R_6$ und $R_7$ unabhängig voneinander Wasserstoff, $C_1$-$C_4$-Alkyl oder durch Sulfo substituiertes Phenyl oder Naphthyl sind, $R_3$ $C_1$-$C_4$-Alkyl, $R_4$ $C_1$-$C_8$-Alkyl oder Benzyl, $R_5$ Wasserstoff oder $C_1$-$C_4$-Alkyl, X -O- oder -$CHR_8$- und $R_8$ $C_1$-$C_4$-Alkyl ist.

**8.** Azofarbstoffe gemäss einem der Ansprüche 1 bis 7, worin $R_1$ durch $C_1$-$C_4$-Alkyl oder Sulfo substituiertes Phenyl, $R_2$ durch Sulfo substituiertes Phenoxy oder -N($R_6$)$R_7$ ist, wobei $R_6$ und $R_7$ unabhängig voneinander Wasserstoff, $C_1$-$C_4$-Alkyl oder durch Sulfo substituiertes Phenyl oder Naphthyl sind, $R_3$ und $R_4$ $C_1$-$C_4$-Alkyl, $R_5$ Wasserstoff oder $C_1$-$C_4$-Alkyl, X -O- oder -$CHR_8$- und $R_8$ $C_1$-$C_4$-Alkyl ist.

**9.** Azofarbstoffe gemäss einem der Ansprüche 1 bis 8, worin der Rest -$SO_2R_2$ in para-Stellung zum Rest-$SO_2R_1$ an den Phenylring gebunden ist.

**10.** Azofarbstoffe gemäss Anspruch 1 der Formel

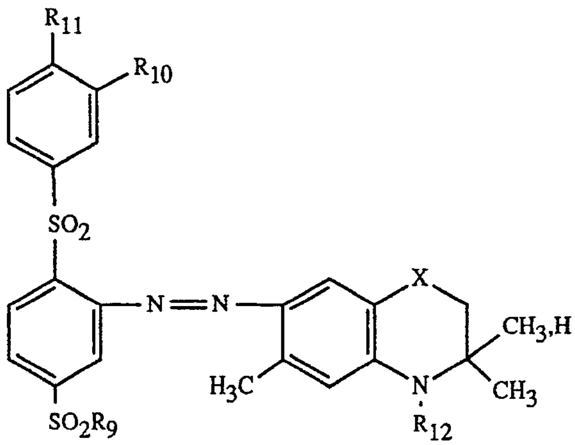

(2),

worin $R_9$ durch Sulfo substituiertes Phenoxy, Amino, Dimethylamino oder durch Sulfo substituiertes Phenylamino oder Naphthylamino, $R_{10}$ Wasserstoff oder Sulfo, $R_{11}$ Methyl oder Chlor, $R_{12}$ $C_1$-$C_8$-Alkyl oder Benzyl und X -O- oder -CHCH$_3$- ist.

**11.** Azofarbstoffe gemäss Anspruch 10, worin $R_{11}$ Methyl und $R_{12}$ Aethyl ist.

**12.** Verfahren zur Herstellung von Azofarbstoffen gemäss Anspruch 1, dadurch gekennzeichnet, dass man ein Amin der Formel

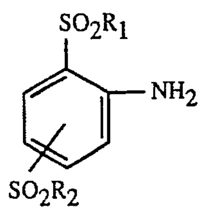

(3),

worin $R_1$ und $R_2$ die in Anspruch 1 angegebenen Bedeutungen haben, diazotiert und auf eine Kupplungskomponente der Formel

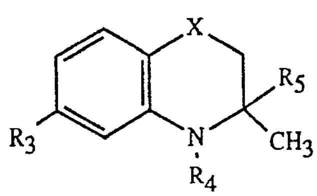

(4),

worin $R_3$, $R_4$, $R_5$ und X die in Anspruch 1 angegebenen Bedeutungen haben, kuppelt, wobei die Diazokomponente der Formel (3) oder die Kupplungskomponente der Formel (4) mindestens eine Sulfo-, Sulfato- oder Thiosulfatogruppe enthält.

**13.** Verwendung der Azofarbstoffe gemäss den Ansprüchen 1 bis 11 bzw. der gemäss Anspruch 12 erhaltenen Azofarbstoffe zum Färben oder Bedrucken von Fasermaterialien.

Patentansprüche für folgenden Vertragsstaat: Spanien

**1.** Verfahren zur Herstellung von Azofarbstoffen der Formel

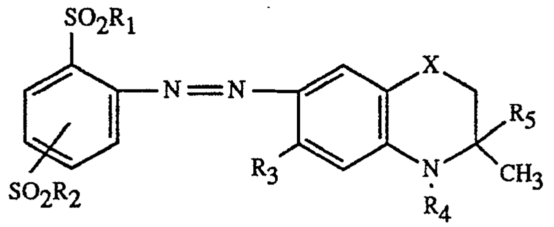

(1),

worin $R_1$ und $R_2$ unabhängig voneinander gegebenenfalls substituiertes $C_1$-$C_8$-Alkyl, $C_1$-$C_8$-Alkoxy, Phenyl, Naphthyl, Phenoxy, Naphthoxy oder -N($R_6$)$R_7$ sind, wobei $R_6$ und $R_7$ unabhängig voneinander Wasserstoff, gegebenenfalls substituiertes $C_1$-$C_8$-Alkyl, Phenyl oder Naphthyl sind, $R_3$ Wasserstoff, $C_2$-$C_4$-Alkanoylamino oder gegebenenfalls substituiertes $C_1$-$C_8$-Alkyl oder $C_1$-$C_8$-Alkoxy, $R_4$ gegebenenfalls substituiertes $C_1$-$C_8$-Alkyl oder Benzyl, $R_5$ Wasserstoff oder gegebenenfalls substituiertes $C_1$-$C_8$-Alkyl ist, X -O- oder -CH$R_8$-, $R_8$ gegebenenfalls substituiertes $C_1$-$C_8$-Alkyl ist und der Farbstoff der Formel (1) mindestens eine Sulfo-, Sulfato- oder Thiosulfatogruppe enthält, dadurch gekennzeichnet, dass man ein Amin der Formel

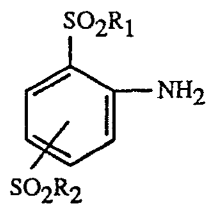

(3),

worin $R_1$ und $R_2$ die unter Formel (1) angegebenen Bedeutungen haben, diazotiert und auf eine Kupplungskomponente der Formel

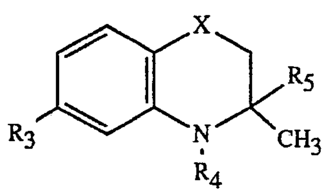

(4),

worin $R_3$, $R_4$, $R_5$ und X die unter Formel (1) angegebenen Bedeutungen haben, kuppelt, wobei die Diazokomponente der Formel (3) oder die Kupplungskomponente der Formel (4) mindestens eine Sulfo-, Sulfato- oder Thiosulfatogruppe enthält.

2. Verfahren gemäss Anspruch 1, dadurch gekennzeichnet, dass man ein Amin der Formel (3) und eine Kupplungskomponente der Formel (4) verwendet, welche zusammen eine oder zwei Sulfo- und/oder Sulfatogruppen enthalten.

3. Verfahren gemäss einem der Ansprüche 1 und 2, dadurch gekennzeichnet, dass man ein Amin der Formel (3) verwendet, worin $R_1$ durch $C_1$-$C_4$-Alkyl, Halogen oder Sulfo substituiertes Phenyl oder Naphthyl, insbesondere durch $C_1$-$C_4$-Alkyl, Halogen oder Sulfo substituiertes Phenyl, ist.

4. Verfahren gemäss einem der Ansprüche 1 bis 3, dadurch gekennzeichnet, dass man ein Amin der Formel (3) verwendet, worin $R_2$ durch Sulfo substituiertes Phenoxy oder Naphthoxy, insbesondere durch Sulfo substituiertes Phenoxy, oder -N($R_6$)$R_7$ ist, wobei $R_6$ und $R_7$ unabhängig voneinander Wasserstoff, $C_1$-$C_4$-Alkyl oder durch Sulfo substituiertes Phenyl oder Naphthyl sind.

5. Verfahren gemäss einem der Ansprüche 1 bis 4,dadurch gekennzeichnet, dass man eine Kupplungskomponente der Formel (4) verwendet, worin $R_3$ $C_1$-$C_4$-Alkyl, $R_4$ $C_1$-$C_8$-Alkyl oder Benzyl und $R_5$ Wasserstoff oder $C_1$-$C_4$-Alkyl ist

6. Verfahren gemäss einem der Ansprüche 1 bis 5, dadurch gekennzeichnet, dass man eine Kupplungskomponente der Formel (4) verwendet, worin X -O- oder $-CHR_8-$ und $R_8$ $C_1$-$C_4$-Alkyl, insbesondere Methyl, ist.

7. Verfahren gemäss einem der Ansprüche 1 bis 6, dadurch gekennzeichnet, dass man ein Amin der Formel (3), worin $R_1$ durch $C_1$-$C_4$-Alkyl, Halogen oder Sulfo substituiertes Phenyl und $R_2$ durch Sulfo substituiertes Phenoxy oder $-N(R_6)R_7$ ist, wobei $R_6$ und $R_7$ unabhängig voneinander Wasserstoff, $C_1$-$C_4$-Alkyl oder durch Sulfo substituiertes Phenyl oder Naphthyl sind, diazotiert und auf eine Kupplungskomponente der Formel (4), worin $R_3$ $C_1$-$C_4$-Alkyl, $R_4$ $C_1$-$C_8$-Alkyl oder Benzyl, $R_5$ Wasserstoff oder $C_1$-$C_4$-Alkyl, X -O-oder $-CHR_8-$ und $R_8$ $C_1$-$C_4$-Alkyl ist, kuppelt.

8. Verfahren gemäss einem der Ansprüche 1 bis 7, dadurch gekennzeichnet, dass man ein Amin der Formel (3), worin $R_1$ durch $C_1$-$C_4$-Alkyl oder Sulfo substituiertes Phenyl und $R_2$durch Sulfo substituiertes Phenoxy oder $-N(R_6)R_7$ ist, wobei $R_6$ und $R_7$ unabhängig voneinander Wasserstoff, $C_1$-$C_4$-Alkyl oder durch Sulfo substituiertes Phenyl oder Naphthyl sind, diazotiert und auf eine Kupplungskomponente der Formel (4), worin $R_3$ und $R_4$ $C_1$-$C_4$-Alkyl, $R_5$ Wasserstoff oder $C_1$-$C_4$-Alkyl, X -O- oder $-CHR_8-$ und $R_8$ $C_1$-$C_4$-Alkyl ist, kuppelt.

9. Verfahren gemäss einem der Ansprüche 1 bis 8, dadurch gekennzeichnet, dass man ein Amin der Formel (3) verwendet, worin der Rest $-SO_2R_2$ in para-Stellung zum Rest $-SO_2R_1$ an den Phenylring gebunden ist.

10. Verfahren gemäss Anspruch 1, dadurch gekennzeichnet, dass man ein Amin der Formel

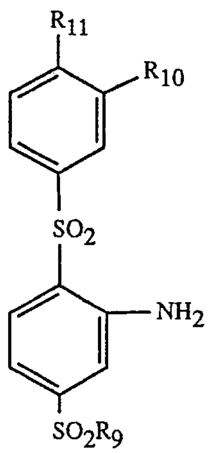

(5),

worin $R_9$ durch Sulfo substituiertes Phenoxy, Amino, Dimethylamino oder durch Sulfo substituiertes Phenylamino oder Naphthylamino, $R_{10}$ Wasserstoff oder Sulfo und $R_{11}$ Methyl oder Chlor ist, wobei das Amin der Formel (5) mindestens eine Sulfogruppe enthält, diazotiert und auf eine Kupplungskomponente der Formel

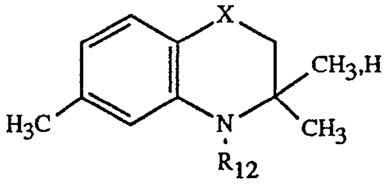

(6),

worin $R_{12}$ $C_1$-$C_8$-Alkyl oder Benzyl und X -O- oder $-CHCH_3-$ ist, kuppelt.

11. Verfahren gemäss Anspruch 10, dadurch gekennzeichnet, dass man ein Amin der Formel (5), worin $R_{11}$ Methyl ist, diazotiert und auf eine Kupplungskomponente der Formel (6), worin $R_{12}$ Aethyl ist, kuppelt.

**12.** Verwendung der gemäss den Ansprüchen 1 bis 11 erhaltenen Azofarbstoffe zum Färben oder Bedrücken von Fasermaterialien.